# EUROPÄISCHE PATENTSCHRIFT

(11) **EP 1 094 239 B1**
(45) Veröffentlichungstag und Bekanntmachung des Hinweises auf die Patenterteilung: **28.04.2004**
(21) Anmeldenummer: 00122112.6
(22) Anmeldetag: 12.10.2000
(51) Int. Cl.: F16F 7/08, F16F 7/09, D06F 37/20, F16F 9/53

(54) **Dämpfer**
Damper
Amortisseur

(30) Priorität: 21.10.1999 DE 19950747
(43) Veröffentlichungstag der Anmeldung: 25.04.2001
(73) Patentinhaber: SUSPA Holding GmbH, 90518 Altdorf (DE)
(72) Erfinder: Peuker, Thomas, 92260 Ammerthal (DE)
(74) Vertreter: Rau, Manfred, Dr. Dipl.-Ing.

(56) Entgegenhaltungen:
- EP-A- 0 301 190
- DE-A- 2 204 325
- US-A- 4 351 515

## Beschreibung

Die Erfindung betrifft einen Dämpfer, insbesondere für Waschmaschinen mit Schleudergang, gemäß dem Oberbegriff des Anspruchs 1.

Aus der DE 22 04 325 C2 ist eine Trommelwaschmaschine mit Federbeinen oder Reibungsdämpfern zur Dämpfung der Schwingungen des Wasch-Aggregats bekannt. Diese weisen jeweils ein Gehäuse mit einem darin verschiebbar geführten Stößel auf. Zur Bestimmung der Einschub-Tiefe des Stößels ist dieser hohl mit einem Permanentmagneten versehen. Dem Gehäuse des Dämpfers in Ausschub-Richtung des Stößels vorgeordnet ist eine den Stößel umgebende Ringspule vorgesehen, die in der Lage ist, die Position des Permanentmagneten in der Ringspule zu detektieren. Durch die bekannte Vorrichtung ist es möglich, eine bestimmte vorgegebene kritische Einschub-Tiefe des Stößels zu ermitteln, und bei dieser beispielsweise den Schleudergang aufgrund besonders starker Schwingungen zu unterbrechen. Das Ergebnis ist insofern nur digital. Nachteilig an dieser Anordnung ist, daß die Position des Stößels nicht kontinuierlich ermittelt werden kann. Darüber hinaus wird durch die dem Gehäuse vorgeordnete Spule die Gesamtanordnung länger. Nachteilig ist ferner, daß die Bestimmung der Zuladung des Wasch-Aggregats nicht möglich ist, da in Folge der großen Haftreibung zwischen Reibbelag und Gehäuse die Einschub-Tiefe kein Maß für die Zuladung ist.

Der Erfindung liegt die Aufgabe zugrunde, einen Dämpfer mit einem Gehäuse und einem verschiebbar in diesem geführten Stößel bereitzustellen, bei dem die Einschub-Tiefe des Stößels in das Gehäuse möglichst einfach ermittelt werden kann und aus dieser die auf den Stößel wirkende Einschubkraft ermittelbar ist.

Die Aufgabe wird durch die Merkmale des kennzeichnenden Teils Anspruchs 1 gelöst. Der Kern der Erfindung besteht darin, daß mit dem Gehäuse und dem Stößel jeweils ein Meßelement verbunden ist, deren relative Position zueinander durch elektrische Wechselwirkung ermittelt wird, wobei der Stößel über einen Teil der Einschub-Tiefe einen im wesentlichen haftreibungsfreien Leerhub aufweist. Dies ermöglicht es, z. B. das Gewicht der trockenen Wäsche und des Wassers im Ruhezustand zu messen und/oder dynamische Unwuchten während des Betriebes zu erfassen. Die Bewegungen des Stößels relativ zur Reibungs-Dämpfungs-Einheit sind fluidisch gedämpft.

Weitere vorteilhafte Ausgestaltungen der Erfindung ergeben sich aus den Unteransprüchen.

Zusätzliche Merkmale und Einzelheiten der Erfindung ergeben sich aus der Beschreibung anhand der Zeichnung. Es zeigen:
- Fig. 1: eine Trommelwaschmaschine in schematischer Darstellung in Seitenansicht mit Federbeinen,
- Fig. 2: eine Trommelwaschmaschine gemäß Fig. 1 in Vorderansicht,
- Fig. 3: eine Trommelwaschmaschine in schematischer Darstellung in Seitenansicht mit Reibungsdämpfern,
- Fig. 4: eine Trommelwaschmaschine gemäß Fig. 3 in Vorderansicht,
- Fig. 5: einen Längsschnitt eines Federbeins gemäß Fig. 1 und
- Fig. 6: einen Längsschnitt eines Reibungsdämpfers gemäß Fig. 3

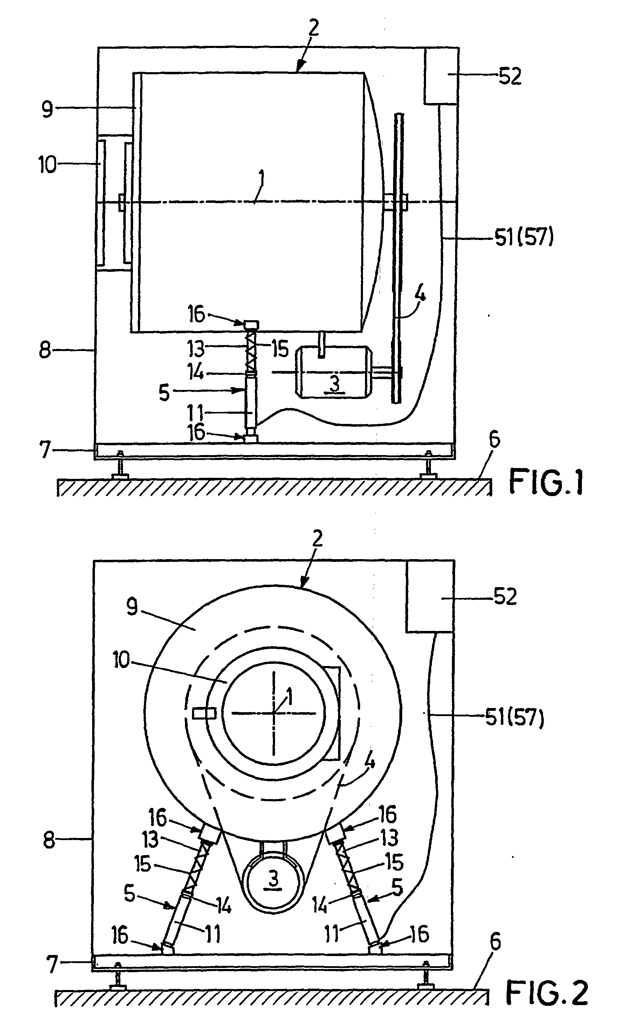

Die in den Fig. 1 und 2 dargestellte Trommelwaschmaschine mit waagrechter Trommel-Achse 1 weist ein schwingungsfähiges Wasch-Aggregat 2 mit einem Antriebs-Motor 3 auf, der eine nicht im einzelnen dargestellte Wasch-Trommel über einen Riemen-Trieb 4 antreibt. Weitere mit dem Wasch-Aggregat 2 verbundene Bestandteile, beispielsweise ein Getriebe, sind der Einfachheit halber nicht dargestellt. Das schwingungsfähige Wasch-Aggregat 2 ist über zwei nachfolgend genauer beschriebene Federbeine 5 gegenüber einem auf dem Boden 6 stehenden, einen Grundrahmen bildenden Maschinen-Gestell 7 abgestützt. Ein das Wasch-Aggregat 2 umgebendes Waschmaschinen-Gehäuse 8 ist gegenüber dem Maschinen-Gestell 7 abgestützt und mit diesem verbunden. Die Eingabe und Entnahme von Wäsche erfolgt durch eine an einer Stirnseite 9 des Wasch-Aggregats 2 angeordnete Klappe 10. Jedes Federbein 5 weist ein rohrförmiges Gehäuse 11 mit einer Mittel-Längs-Achse 12 auf, in dem koaxial ein Stößel 13 verschiebbar geführt ist. Im Bereich des freien Endes des Stößels 13 ist ein Anschlag 14 befestigt. Eine den außerhalb des Gehäuses 11 befindlichen Abschnitt des Stößels 13 umgebende, vorgespannte Schrauben-Druckfeder 15 ist gegenüber dem Anschlag 14 einerseits und dem stößelaustrittsseitigen Ende des Gehäuses 11 andererseits abgestützt, so daß der Stößel 13 gegen die Kraft der Feder 15 in das Gehäuse 11 einschiebbar ist. Am freien Ende des Stößels 13 ist eine elastische Anlenkung 16 vorgesehen. Diese weist ein mit dem Wasch-Aggregat 2 verbundenes Lager 17 auf, das über elastische Blöcke 18 mit dem Stößel 13 verspannt ist. In gleicher Weise ist das freie Ende des Gehäuses 11 an dem Maschinen-Gestell 7 angelenkt.

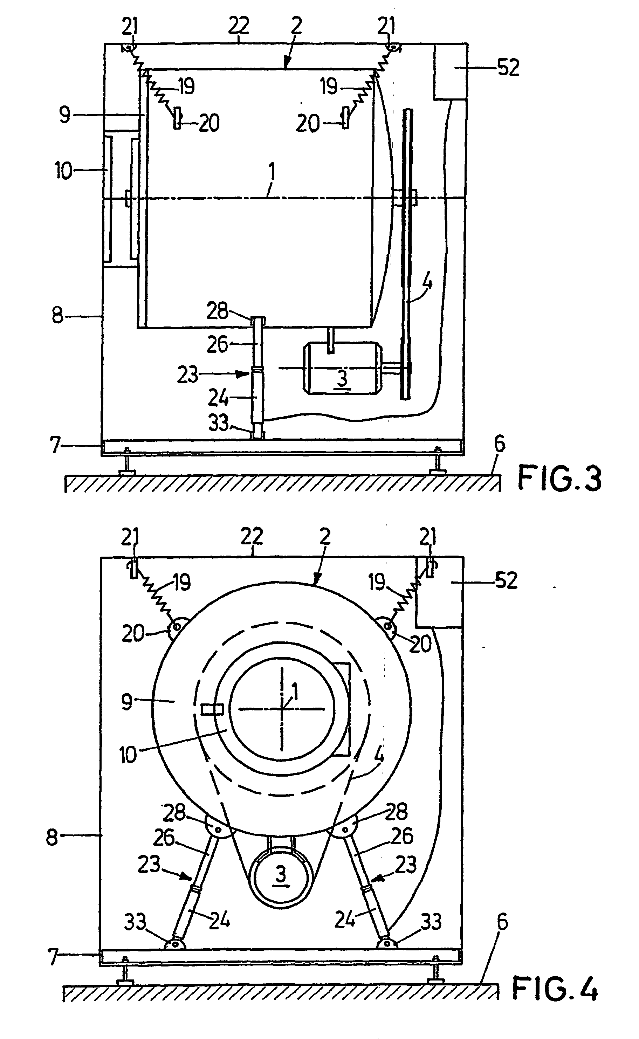

Die Trommelwaschmaschine nach den Fig. 3 und 4 unterscheidet sich von der nach den Fig. 1 und 2 dadurch, daß das Wasch-Aggregat 2 an dem Maschinen-Gehäuse 8 mittels Schrauben-Zugfedern 19 aufgehängt ist. Die Zugfedern 19 sind einerseits an Ösen 20 angebracht, die im oberen Bereich des Wasch-Aggregats 2 angebracht sind. Andererseits sind sie an Ösen 21 aufgehängt, die an der Deckplatte 22 des Waschmaschinen-Gehäuses 8 ausgebildet sind. An der Unterseite des Wasch-Aggregats 2 sind in Längsrichtung mittig zwei nachfolgend genauer beschriebene Reibungsdämpfer 23 angebracht, die mit dem Maschinen-Gestell 7 verbunden sind. Jeder Reibungsdämpfer 23 weist ein zylindrisches Gehäuse 24 mit einer Mittel-Längs-Achse 25 auf, in dem koaxial ein Stößel 26 verschiebbar geführt ist. Der Stößel 26 weist an seinem freien Ende eine Gelenk-Büchse 27 als Anlenkelement auf, mittels derer der Reibungsdämpfer 23 an einem Lager 28 am Wasch-Aggregat 2 so angebracht ist, daß der Reibungsdämpfer 23 um eine Schwenkachse 29 relativ zum Wasch-Aggregat 2 schwenkbar ist, die parallel zur Trommel-Achse 1 verläuft. Am äußeren Ende 30 des Gehäuses 24 ist ebenfalls eine Gelenk-Büchse 31 angebracht, deren Schwenkachse 32 gleichermaßen wie die Schwenkachse 29 die Mittel-Längs-Achse 25 senkrecht schneidet. Mit dieser Gelenk-Büchse 31 wird der Reibungsdämpfer 23 an einem Lager 33 am Maschinen-Gestell 7 so angebracht, daß die Schwenkachse 32 ebenfalls parallel zur Trommel-Achse 1 verläuft.

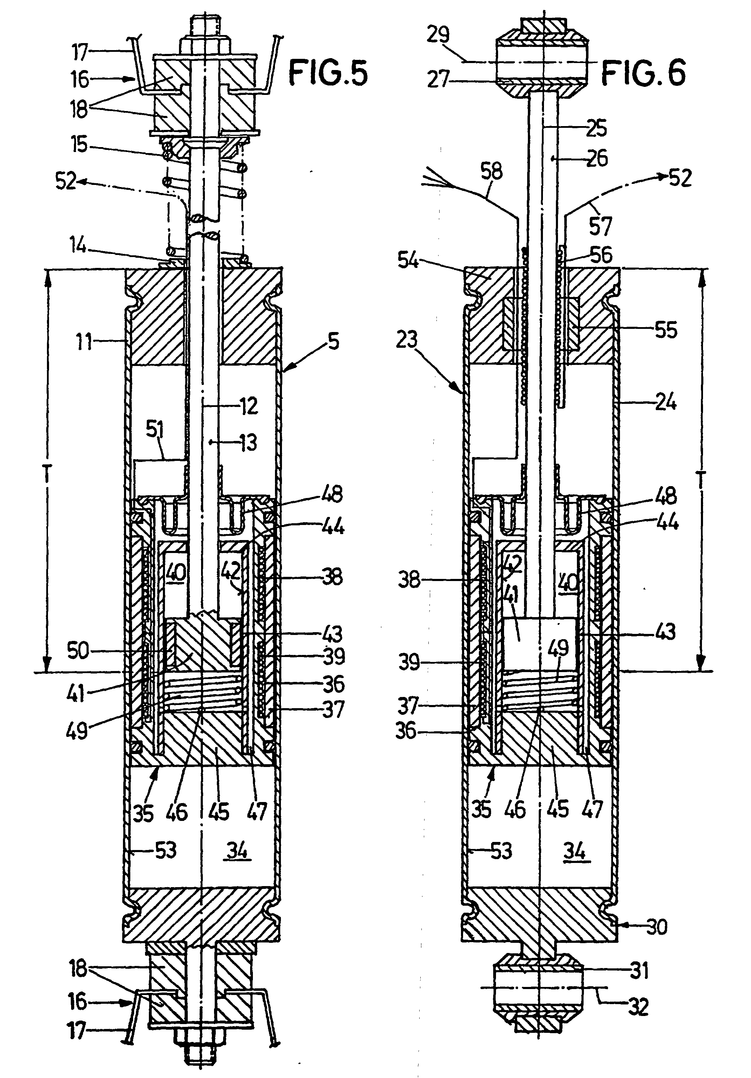

Im folgenden wird der Aufbau des Federbeins 5 unter Bezugnahme auf Fig. 5 genauer beschrieben. Am im Gehäuse-Innenraum 34 des Gehäuses 11 befindlichen Ende des Stößels 13 ist ein Reibungs-Dämpfungs-Kolben 35 vorgesehen, der mit einer ringförmigen Ausnehmung 36 versehen ist, in der ein Reibungs-Element 37 angeordnet ist.

Das Reibungs-Element 37 besteht aus einem offenzelligen geschäumten Kunststoff, beispielsweise Polyurethan oder Polyamid. Der geschäumte Kunststoff dient als Rückhaltemedium für eine magneto-rheologische Flüssigkeit, wie sie beispielsweise aus der US 5,382,373 oder der US 5,578,232 bekannt ist. Der Grundaufbau einer magneto-rheologischen Reibungsdämpfung in der Anwendung bei einem Reibungs-Dämpfer ist aus der WO 99/22162 bekannt, auf deren Fig. 5 und zugehörige Beschreibung ausdrücklich Bezug genommen wird. Der Dämpfungs-Kolben 35 weist innerhalb des Reibungs-Elements 37 in Richtung der Mittel-Längs-Achse 12 hintereinander zwei Spulen 38, 39 auf. Er besteht außerhalb der Spulen 38, 39 aus einem ferromagnetischen Werkstoff, wodurch deren Kern gebildet wird.

Der Dämpfungs-Kolben 35 ist auf dem Stößel 13 mit einem Leer-Hub angebracht. Hierzu ist der Dämpfungs-Kolben 35 in seinem Inneren mit einem ringzylindrischen Hydraulik-Dämpfungs-Zylinder 40 versehen, in dem ein in Richtung der Achse 12 am Stößel 13 befestigter Hydraulik-Dämpfungs-Kolben 41, vorzugsweise aus Kunststoff, zusammen mit dem Stößel 13 verschiebbar angeordnet ist. Zwischen dem Kolben 41 und der Innenwand 42 des Zylinders 40 ist ein in der Zeichnung nicht wahrnehmbarer Drosselspalt 43 ausgebildet. Der Zylinder 40 oder zumindest seine Innenwand 42 bestehen vorzugsweise aus Kunststoff. Der Zylinder 40 begrenzt einen Innenraum 44, aus dem in der Nähe seines Bodens 45 ein Ausgleichskanal 46 ausmündet, der in einen den Zylinder 40 umgebenden Ausgleichsraum 47 mündet. Dieser Ausgleichsraum 47 ist an dem dem Stößel 13 zugewandten Ende mit einem balgartigen Ausgleichsboden 48 verschlossen, der einerseits dicht am Dämpfungs-Kolben 35 und andererseits am Stößel 13 angebracht ist, so daß dieser Ausgleichsboden 48 Bewegungen des Stößels 13 relativ zum Dämpfungs-Kolben 35 mitmachen kann und gleichzeitig unterschiedliche Volumina des Ausgleichsraumes 47 kompensieren kann. Der Zylinder 40 und der Ausgleichsraum 47 sind mit einem Dämpfungs-Fluid, insbesondere normalem Hydrauliköl, gefüllt. Zwischen dem Hydraulik-Dämpfungs-Kolben 41 und dem Boden 45 des Hydraulik-Dämpfungs-Zylinders 40 ist eine Rückstell-Feder 49 angeordnet, die so dimensioniert und eingestellt ist, daß sie in der Ruhelage des Dämpfungs-Kolbens 35 relativ zum Stößel 13 diesen in eine Position bringt, in der der Hydraulik-Dämpfungs-Kolben 41 sich in einer Mittellage des Innenraumes 44 des Hydraulik-Dämpfungs-Zylinders 40 befindet.

Das Federbein 5 weist weiterhin eine Stößelpositions-Meßeinrichtung zur Erfassung der Einschub-Tiefe T des Stößels 13 in das Gehäuse 11 auf. Die Meßeinrichtung weist einen ringzylindrisch ausgebildeten Geber 50 auf, der am Hydraulik-Dämpfungs-Kolben 41, also in einer räumlich festen Zuordnung zum Stößel 13, befestigt ist. Der Geber 50 besteht aus Metall, insbesondere Eisen oder einem anderen ferromagnetischen Werkstoff. Die Spulen 38, 39 sind bei dieser Ausgestaltung Teil der Meßeinrichtung. Die Spulen 38, 39 sind über elektrische Verbindungsleitungen 51 mit einer Auswerte-Einheit 52 verbunden.

Für den Fall, daß nur eine Spule 38/39 vorhanden ist, handelt es sich bei der Meßeinrichtung um einen sogenannten induktiven Wegaufnehmer. Bei diesem wird durch das Einschieben des Gebers 50 in den Innenraum der Spule 38/39 deren Induktivität verändert. Die Auswertung der Induktivität der Spule 38/39 erfolgt an einer in der Elektrotechnik allgemein bekannten Viertelbrücke.

Für den Fall, daß - wie dargestellt - zwei Spulen 38, 39 vorgesehen sind, handelt es sich bei der Meßeinrichtung um eine sogenannte Differentialdrossel. An die Verbindungsleitungen wird ein elektrisches Signal angelegt bzw. von diesen abgegriffen. Durch ein Verschieben des Gebers 50 innerhalb der Spulen 38, 39 wird deren Induktivität verändert. Über ungefähr 80 % der Erstreckung der Spulen 38, 39 in Richtung der Achse 12 besteht ein im wesentlichen linearer Zusammenhang zwischen einer Änderung der Einschub-Tiefe T und der Induktivität. Die Spulen 38, 39 erstrekken sich mindestens über den Bereich des Zylinders 40, über den der Stößel 13 mit dem Kolben 41 verschoben werden kann.

Die Auswertung der Einschub-Tiefe T über die Induktivitätsänderung setzt voraus, daß der Geber 50 aus einem ferromagnetischen Material, beispielsweise aus Eisen/Stahl, besteht. Wenn eine Auswertung der Einschub-Tiefe T über einen Wirbelstromeffekt erfolgt, dann sollte der Geber 50 aus einem nichtferromagnetischen, aber elektrisch leitenden Material bestehen, beispielsweise also aus Aluminium.

Zum Betrieb der Waschmaschine wird das Wasch-Aggregat 2 zunächst mit Wäsche beladen. Hierdurch sinkt der Stößel 13 in das Gehäuse 11, ohne daß der Dämpfungs-Kolben 35 mitgenommen wird. Der Hydraulik-Dämpfungs-Kolben 41 bewegt sich hierbei in Richtung des Bodens 45 des Hydraulik-Zylinders 44. Diese Einschubbewegung ist hydraulisch gedämpft, aber haftreibungsfrei. Der Dämpfungs-Kolben 35 sollte durch eine entsprechende überlagerte Erregung der Spulen 38, 39 im Gehäuse 11 vollständig oder teilweise blockiert werden, da durch eine entsprechende Erregung der Spulen 38, 39 die Haftreibungskraft zwischen dem Reibungs-Element 37 und der Innenwand 53 des Gehäuses 11 aufgrund des bekannten magneto-rheologischen Effekts sehr groß wird. Die Haftreibungskraft sollte auf jeden Fall größer sein als die vom Stößel 13 auf den Dämpfungs-Kolben 41 übertragene Kraft, damit u.a. die beim Einwerfen von Wäsche auftretenden Impulse nicht eine Verschiebung des Kolbens 35 bewirken.

Durch Auswertung des auf das Eintauchen des Stößels 13 in den Dämpfungs-Kolben 35 erzeugten Signals in der Auswerte-Einheit 52 kann das Gewicht der in das Wasch-Aggregat 2 eingefüllten Wäschemenge ermittelt werden, da die Gesamtfeder-Charakteristik des Wasch-Aggregats samt der federnden Abstützung bekannt ist.

Durch eine geeignete Entkopplung einerseits der zur Erregung der Spulen 38, 39 notwendigen Ströme und der durch die Relativbewegungen des Gebers 50 zu den Spulen 38, 39 erzeugten Signale in der Auswerte-Einheit 52 kann auch während des Betriebes der Waschmaschine eine Anpassung der Reibungskräfte zwischen Reibungs-Element 37 und Innenwand 53 des Gehäuses 11 erreicht werden, indem die Erregung der Spulen 38, 39 in einem gewünschten Sinne jeweils beeinflußt wird.

Der Reibungsdämpfer nach Fig. 6 entspricht weitgehend dem Federbein nach Fig. 5. Soweit identische Teile vorliegen, werden in Fig. 6 die gleichen Bezugsziffern verwendet wie in Fig. 5; einer erneuten Beschreibung bedarf es nicht. Der wesentliche Unterschied zwischen dem Reibungsdämpfer nach Fig. 6 und dem Federbein nach Fig. 5 besteht darin, daß die Meßeinrichtung vollständig von dem Dämpfungs-Kolben 35 getrennt ist. Im oberen Gehäuse-Boden 54 des Gehäuses 24 ist ortsfest ein Geber 55 angeordnet, der dem Geber 50 entspricht. Am Stößel 26 ist eine diesen umgebende Spule 56 als Teil der Meßeinrichtung angebracht, die über Verbindungsleitungen 57 mit der Auswerte-Einheit 52 verbunden ist. Die Spulen 38, 39 dienen ausschließlich der Erzeugung eines Magnetfeldes zur Veränderung der Reibungseigenschaften des Reibungs-Elements 37. Sie werden über eine elektrische Versorgungsleitung 58 mit Strom versorgt.

Die Wirkungsweise ist die gleiche wie im Zusammenhang mit dem Federbein 5 erläutert. Entscheidend ist, daß die Meßeinrichtung mit der Spule 56 und dem Geber 55 vollständig von den Magnet-Spulen 38, 39 entkoppelt ist. Auch hier gilt, daß die axiale Erstreckung der Spule 56 mindestens dem maximalen axialen Weg des Kolbens 41 im Zylinder 40 entsprechen sollte, wobei beim Beladen mit Wäsche auch hierbei der Dämpfungs-Kolben 35 im Gehäuse 24 durch entsprechende Ansteuerung der Spulen 38, 39 festgestellt werden sollte.

Die Anordnung der Spule 56 kann naturgemäß auch bei einem Federbein 5 und die doppelte Verwendung der Spulen 38, 39 bei einem Reibungsdämpfer 23 vorgenommen werden.

## Patentansprüche

1. Dämpfer (5, 23) insbesondere für Waschmaschinen mit Schleudergang, mit
a) einem eine Mittel-Längs-Achse (12, 25) aufweisenden rohrförmigen Gehäuse (11, 24),
b) einem in dem Gehäuse (11, 24) verschiebbaren und aus einem Ende desselben herausragenden Stößel (13, 26),
c) jeweils am freien Ende des Gehäuses (11, 24) und des Stößel (13, 26) angebrachten Befestigungselementen (18, 27, 31),
d) einer Reibungs-Dämpfungs-Einheit zur Erzeugung einer Reibungsdämpfung zwischen dem Gehäuse (11, 24) und dem Stößel (13, 26), und
e) einer Stößelpositions-Meßeinrichtung zur Erfassung der Einschub-Tiefe T des Stößels (13, 26) in das Gehäuse (11, 24), welche aufweist
i) ein dem Gehäuse (11,24) oder der Reibungs-Dämpfungs-Einheit zugeordnetes erstes Meßelement, und
ii) ein mit dem Stößel (13, 26) verbundenes zweites Meßelement zum elektrischen und/oder magnetischen Zusammenwirken mit dem ersten Meßelement, wobei das erste Meßelement und das zweite Meßelement ineinander einschiebbar sind,
**dadurch gekennzeichnet, daß**
f) die Stößelpositions-Meßeinrichtung eine mit dem ersten Meßelement und dem zweiten Meßelement elektrisch leitend verbundene Auswerte-Einheit (52) zum Geben elektrischer Signale und zum Aufnehmen und Verarbeiten elektrischer Signale zur Bestimmung der Einschub-Tiefe T aufweist, und
g) im Bereich einer vorgegebenen Änderung der Einschubtiefe T der Stößel (13, 26) gegenüber dem Gehäuse (11, 24) haftreibungsfrei aber fluidisch gedämpft verschiebbar ist.

2. Dämpfer (5, 23) nach Anspruch 1, **dadurch gekennzeichnet,**
**daß** das erste Meßelement oder das zweite Meßelement mindestens eine Spule (38, 39, 56) aufweist.

3. Dämpfer (5, 23) nach Anspruch 2, **dadurch gekennzeichnet,**
**daß** zwei Spulen (38, 39) vorgesehen sind.

4. Dämpfer (5, 23) nach Anspruch 2 oder 3, **dadurch gekennzeichnet,**
**daß** das Meßelement, welches keine Spule aufweist, als Geber (50, 55) aus Metall ausgebildet ist.

5. Dämpfer (5, 23) nach einem der Ansprüche 1 bis 4, **dadurch gekennzeichnet,**
**daß** die Reibungs-Dämpfungs-Einheit durch einen auf dem Stößel (13, 26) begrenzt verschiebbar angeordneten Dämpfungs-Kolben (35) gebildet ist.

6. Dämpfer (5, 23) nach Anspruch 5, **dadurch gekennzeichnet,**
**daß** im Dämpfungs-Kolben (35) eine Verschiebung des Stößels (13, 26) relativ zum Dämpfungs-Kolben (35) fluidisch dämpfender Hydraulik-Dämpfer ausgebildet ist.

7. Dämpfer (5, 23) nach Anspruch 5, **dadurch gekennzeichnet,**
**daß** der Dämpfungs-Kolben (35) ein mit einem magneto-rheologischen Medium versehenes Reibungs-Element (37) aufweist, dessen Reibung gegenüber der Innenwand (53) des Gehäuses (11, 24) durch ein durch eine Spule (38, 39) einstellbares Magnetfeld veränderbar ist.

8. Dämpfer (5, 23) nach Anspruch 7, **dadurch gekennzeichnet,**
**daß** die mindestens eine Spule (38, 39) der Stößelpositions-Meßeinrichtung auch als Spule zur Erzeugung des Magnetfeldes dient.

## Claims

1. A damper (5, 23), in particular for washing machines which have a spinning cycle, comprising
a) a tubular casing (11, 24) which has a central longitudinal axis (12, 25),
b) a tappet (13, 26) which is displaceable in the casing (11, 24) and extends out of an end thereof,
c) fastening elements (18, 27, 31) which are mounted on a free end of the casing (11, 24) and of the tappet (13, 26), respectively,
d) a friction damping unit for generating frictional damping between the casing (11, 24) and the tappet (13, 26), and
e) a tappet-position-measuring system which serves for detecting the depth of insertion T of the tappet (13, 26) into the casing (11, 24) and which comprises
i) a first measuring element allocated to the casing (1, 24) or the friction damping unit, and
ii) a second measuring element joined to the tappet (13, 26) for electric and/or magnetic cooperation with the first measuring element, the first measuring element and the second measuring element being insertable into each other,
**characterized in that**
f) the tappet-position-measuring system comprises an evaluation unit (52) which is electrically conductively connected to the first measuring element and the second measuring element and which serves for emitting electric signals and recording and processing electric signals for determination of the depth of insertion T, and
g) the tappet (13, 26) is displaceable relative to the casing (11, 24) free from friction, but fluidically damped within the range of a given modification of the depth of insertion T.

2. A damper (5, 23) according to claim 1, **characterized in that** the first measuring element or the second measuring element comprises at least a coil (38, 39, 56).

3. A damper (5, 23) according to claim 2, **characterized in that** two coils (38, 39) are provided.

4. A damper (5, 23) according to claim 2 or 3, **characterized in that** the measuring element which does not comprise a coil is a transmitter (50, 55) of metal.

5. A damper (5, 23) according to one of claims 1 to 4, **characterized in that** the friction damping unit is a damping piston (35) which is disposed for limited displacement on the tappet (13, 26).

6. A damper (5, 23) according to claim 5, **characterized in that** a hydraulic damper is formed in the damping piston (35), fluidically damping a displacement of the tappet (13, 26) relative to the damping piston (35).

7. A damper (5, 23) according to claim 5, **characterized in that** the damping piston (35) comprises a friction element (37), which is provided with a magnetorheological medium and the friction of which toward the inside wall (53) of the casing (11, 24) is modifiable by a magnetic field to be adjusted by a coil (38, 39).

8. A damper (5, 23) according to claim 7, **characterized in that** the at least one coil (38, 39) of the tappet-position-measuring system also serves as a coil for the generation of the magnetic field.

## Revendications

1. Amortisseur (5, 23) en particulier pour machines à laver avec essorage, comportant
a) un boîtier (11, 24) tubulaire présentant un axe central longitudinal (12, 25),
b) un poussoir (13, 26) pouvant se déplacer dans le boîtier (11, 24) et dépassant d'une extrémité de celui-ci,
c) des éléments de fixation (18, 27, 31) disposés chacun sur l'extrémité libre du boîtier (11, 24) et du poussoir (13, 26),
d) une unité d'amortissement à friction pour la production d'un amortissement à friction entre le boîtier (11, 24) et le poussoir (13, 26), et
e) un dispositif de mesure de la position du poussoir pour la détection de la profondeur d'insertion T du poussoir (13, 26) dans le boîtier (11,24) qui présente
i) un premier élément de mesure associé au boîtier (11, 24) ou à l'unité d'amortissement à friction et
ii) un deuxième élément de mesure relié au poussoir (13, 26) pour l'interaction électrique et/ou magnétique avec le premier élément de mesure, le premier élément de mesure et le deuxième élément de mesure pouvant s'emboîter l'un dans l'autre,
**caractérisé en ce que**
f) le dispositif de mesure de la position du poussoir présente une unité d'analyse (52) reliée au premier élément de mesure et au deuxième élément de mesure de manière électriquement conductrice permettant l'émission de signaux électriques et l'enregistrement et le traitement de signaux électriques pour déterminer la profondeur d'insertion T, et
g) le poussoir est mobile sans frottement par adhérence mais de façon amortie par un fluide dans la région d'une modification prédéfinie de la profondeur d'insertion T du poussoir (13, 26) par rapport au boîtier (11, 24).

2. Amortisseur (5, 23) selon la revendication 1, **caractérisé en ce que**
le premier élément de mesure ou le deuxième élément de mesure présente au moins une bobine (38, 39, 56).

3. Amortisseur (5, 23) selon la revendication 2, **caractérisé en ce que** deux bobines (38, 39) sont prévues.

4. Amortisseur (5, 23) selon la revendication 2 ou 3, **caractérisé en ce que**
l'élément de mesure, qui ne présente pas de bobine, est configuré comme un émetteur (50, 55) en métal.

5. Amortisseur (5, 23) selon l'une quelconque des revendications 1 à 4, **caractérisé en ce que**
l'unité d'amortissement à friction est formée d'un piston d'amortissement (35) monté mobile de façon limitée sur le poussoir (13, 26).

6. Amortisseur (5, 23) selon la revendication 5, **caractérisé en ce que**
dans le piston d'amortissement (35), est formé un amortisseur hydraulique à amortissement fluidique d'un déplacement du poussoir (13, 26) par rapport au piston d'amortissement (35).

7. Amortisseur (5, 23) selon la revendication 5, **caractérisé en ce que**
le piston d'amortissement (35) présente un élément de friction (37) doté d'un milieu magnéto-rhéologique dont la friction contre la paroi intérieure (53) du boîtier (11, 24) peut être modifiée par un champ magnétique réglable par une bobine (38, 39).

8. Amortisseur (5, 23) selon la revendication 7, **caractérisé en ce que**
au moins une bobine (38, 39) du dispositif de mesure de la position du poussoir sert également de bobine destinée à la production du champ magnétique.
